# EUROPEAN PATENT SPECIFICATION

(11) **EP 1 775 897 B1**
(45) Date of publication and mention of the grant of the patent: **06.01.2010**
(21) Application number: 06121294.0
(22) Date of filing: 26.09.2006
(51) Int. Cl.: H04L 12/56

(54) **Interleaving in a NoC (Network on Chip) employing the AXI protocol**
Verschachtelung in einem NoC (Network on Chip) mit dem AXI Protokoll
Entrelacement dans un réseau sur puce (NoC) au moyen du protocole AXI

(30) Priority: 17.10.2005 KR 20050097582
(43) Date of publication of application: 18.04.2007
(73) Proprietor: Samsung Electronics Co., Ltd., Suwon-si, Gyeonggi-do (KR)
(72) Inventor: Kim, Eui-seok, Gyeonggi-do (KR); Rhim, Sang-woo, Seoul (KR); Lee, Beom-hak, Seoul (KR)
(74) Representative: Ertl, Nicholas Justin

(56) References cited:
- EP-A2- 0 763 915
- RADULESCU A ET AL: "An efficient on-chip NI offering guaranteed services, shared-memory abstraction, and flexible network configuration" IEEE TRANSACTIONS ON COMPUTER AIDED DESIGN OF INTEGRATED CIRCUITS AND SYSTEMS, IEEE SERVICE CENTER, PISCATAWAY, NJ, US, vol. 24, no. 1, January 2005 (2005-01), pages 4-17, XP002343901 ISSN: 0278-0070
- BJERREGAARD T ET AL: "A Scheduling Discipline for Latency and Bandwidth Guarantees in Asynchronous Network-on-Chip" ASYNCHRONOUS CIRCUITS AND SYSTEMS, 2005. ASYNC 2005. PROCEEDINGS. 11TH IEEE INTERNATIONAL SYMPOSIUM ON NEW YORK CITY, NY, USA 14-16 MARCH 2005, PISCATAWAY, NJ, USA,IEEE, 14 March 2005 (2005-03-14), pages 34-43, XP010777859 ISBN: 0-7695-2305-6

## Description

### BACKGROUND OF THE INVENTION

Systems and methods consistent with the present invention relate to a Network-on-Chip (NoC) system employing the Advanced eXtensible Interface (AXI) protocol and an interleaving method thereof, and more particularly, to an NoC system employing the AXI protocol and an interleaving method thereof, capable of smoothly transmitting data according to the interleaving acceptance capability of an Intellectual Property (IP) when the AXI protocol is applied to the NoC.

Coping with the convergence which gradually integrates computers, communications, and broadcast, demands on conventional Application Specific Integrated Circuit (ASIC) and Application Specific Standard Product (ASSP) have tended to move to System on Chip (SoC) designs. In addition, the light-weight, thin, and high-performance trends of information technology (IT) devices have become a factor accelerating SoC industry growth.

The Soc is a technology-intensive semiconductor technology that implements a complicated system having several conventional functions in one chip. Various technologies are under study for SoC implementations, and, specifically, a method of connecting several Intellectual Properties (IPs) embedded in a chip is emerging as an important topic. Here, IP refers intellectual property cores which may be embedded on a chip. These IPs are reusable virtual components which may include both digital and analog circuitry, which perform specific functions (e.g. controllers, digital signal processing, graphics).

A connection method based on a bus is typical of the technology for connecting IPs. However, in a bus structure, if a specific IP uses the bus, the other IP's cannot use the bus. Therefore, as the integration density of a chip becomes higher and the amount of information traffic between IPs is abruptly increased, the SoC using a bus structure without extensibility support encounters certain structural limitations thereof.

As an approach for overcoming such structural limitations of the SoC using a bus structure, a NoC technology was newly proposed, which applies general network technologies within a chip to connect the IPs

Further, there is an Advanced Microcontroller Bus Architecture (AMBA) by ARM which is a standard bus specification for connecting and managing the IPs in a SoC. The bus types of the AMBA include an Advanced High-Performance Bus (AHB), an Advanced Peripheral Bus (APB), and an AXI. Of the above, the AXI is an IP interface protocol, having advanced functions such as a multiple outstanding address function, a data interleaving function, and the like.

When information is provided through address lines and data lines of a bus, a multiple outstanding address function is a function capable of transmitting an address for next data transmission before data is completely transmitted. When several masters transmit data to one slave, the data interleaving function allows the data to be interleaved with each other at the slave, thus allowing the more efficient utilization of a bandwidth as well as providing an advantage in respect of latency.

When the AXI having such functions is implemented in the NoC as an interface protocol between each IP and a switch of an NoC, the structural limitations occurring at the SoC due to the characteristics of the bus can be overcome, so the speed and reusability upon data transmissions between IPs are expected to be increased.

A paper entitled "An Efficient On-Chip NI Offering Guaranteed Services, Shared-Memory Abstraction, and Flexible Network Configuration", published January 2005 in IEEE Transactions on Computer-Aided Design of Integrated Circuits and System by Philips proposes a network interface (NI) and packet formats for an NoC employing the AXI.

However, the paper of Philips only conceptually explains the devices for supporting the AXI, and focuses on the point that the AXI is used for connections between the NoC and the IP. Further, one burst is converted into one packet and then transmitted, so it is impossible to support not only diverse AXI functions such as a multiple outstanding address function, a data interleaving function, and a data reordering function but also Write strobes (WSTRB). Furthermore, when one burst is converted into one packet, the bandwidth utilization capability becomes lowered since the larger a burst size is, the longer the waiting time for converting the burst into the packet becomes.

Meantime, if the AXI is applied to the NoC system, the master or slave can receive a data stream of one or more interleaved bursts or packets, according to a predetermined Interleaving Acceptance Capability (IAC).

The interleaving acceptance capability is determined according to the performance of each slave or master, and the greater the interleaving acceptance capability, the more excellent the performance and the higher the price of the slave or master. Accordingly, the interleaving acceptance capability of each master or slave is limited depending on the performance of a device.

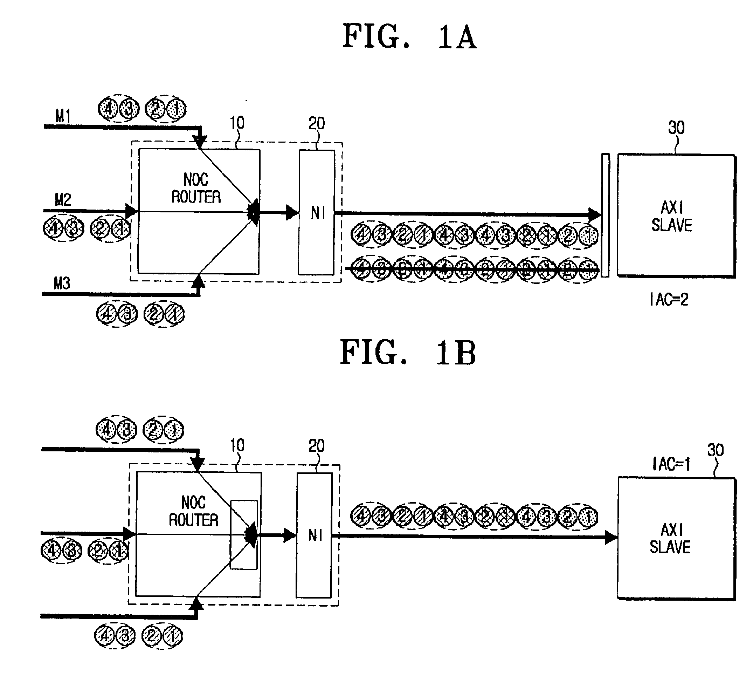

FIG. 1A is a view illustrating a process of interleaving the data transmitted by plural AXI masters and transmitting the interleaved data to an AXI slave 30 having interleaving acceptance capability of "2".

As shown in FIG. 1A, the data transmitted by the AXI masters through an NoC router are transferred to an AXI slave 30 through an NI 20. Since the interleaving acceptance capability of the AXI slave 30 is "2", as shown in the first line, when the data packets from the AXI master M1 and the AXI master M2 are allowed to be transmitted in the interleaved manner, data are allowed to be transmitted. However, as shown in the second line, when three kinds of data packets transmitted from the AXI master M1, AXI master M2, and AXI master M3 are interleaved, data transmission is not allowed. That is, when the AXI master and the AXI slave 30 transmit data to each other, the number of interleaved data packets or bursts must be smaller than or equal to the interleaving acceptance capability of the AXI master and the AXI slave 30.

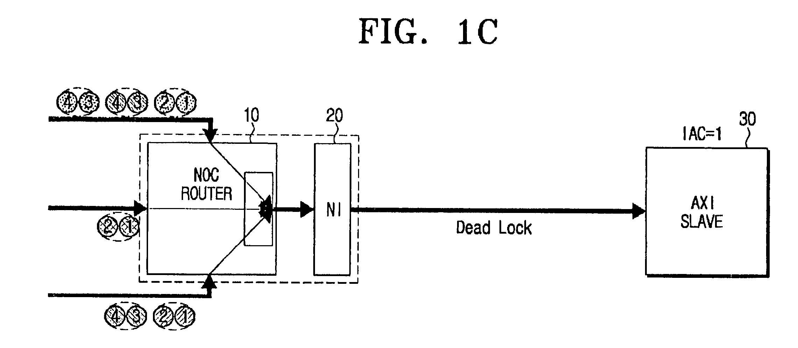

As shown in FIG 1B, when the interleaving acceptance capability of the AXI slave 30 is "1", there is a method, as a simplest method, of transmitting data from each AXI master in a the burst unit. However, as shown in FIG. 1C, when a different kind of data is inserted between data packets transmitted from one AXI master, a deadlock occurs since it has the same effect as two kinds of data are interleaved.

Accordingly, when the AXI is applied to an NoC system, a method is needed to be sought which can smoothly transmit data according to the interleaving acceptance capability.

EP 0 763 915 describes a packet transfer device in an asynchronous transfer mode system with a plurality of buffers.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to an aspect of the present invention, there is provided an NoC system according to claim 1.

During transmitting data by selecting at least one buffer according to the interleaving acceptance capability of the destination AXI component, or IP, if all data stored in at least one of the selected buffers are completely transmitted, the interleaving manager can select another buffer containing data.

If the number of data-containing buffers of the buffers is smaller than the interleaving acceptance capability of the destination AXI IP, the interleaving manager can decrease the number of buffers to be interleaved.

The NoC system may further comprise a classifier installed at a front stage of the buffers for classifying data provided from the AXI IP according to the AXI IP. The classifier can be implemented with a demultiplexer.

The NoC system may further comprise an output unit installed at a rear stage of the buffers for retrieving data from at least one of the buffers selected by the interleaving manager and providing the data to the destination AXI IP. The output unit can be implemented with a multiplexer.

The number of buffers may be determined to be the same as the number of AXI IPs accessible to the destination AXI IP, so that the buffers match the AXI IPs in a one-to-one manner.

A size of each buffer can be determined to be the same as a maximum value of a transmission unit that the AXI IP can transmit in one burst.

A size of each buffer can be determined to be in a one-to-one match according to transmission capacity set for each AXI IP.

According to another aspect of the present invention, there is provided an interleaving method for an NoC system employing AXI, comprising storing data transmitted from plural AXI IPs by classifying the data according to the plural AXI IP; selecting at least one buffer according to interleaving acceptance capability which is the number of interleaving data that can be accepted by a destination AXI IP; and retrieving data from the selected buffers, interleaving the retrieved data, and transmitting the interleaved data to a destination AXI IP.

The present invention thus provides an NoC system employing AXI and an interleaving method thereof, capable of smoothly transmitting data according to the interleaving acceptance capability of an IP when the AXI protocol is applied to the NoC.

### BRIEF DESCRIPTION OF THE DRAWINGS

The above and other aspects of the present invention will be more apparent by describing certain exemplary embodiments of the present invention with reference to the accompanying drawings, in which:
FIG. 1A is a view illustrating a process of interleaving data transmitted from plural AXI masters and transmitting the interleaved data to an AXI slave having interleaving acceptance capability of "2";
FIGS. 1B and 1C are views illustrating the process of interleaving data transmitted from plural AXI masters and transmitting the interleaved data to an AXI slave having interleaving acceptance capability of "1";
FIG. 2 is a block diagram illustrating a configuration of an NoC router having an interleaving device therein according to an exemplary embodiment of the present invention;
FIG. 3 is a block diagram illustrating a configuration of an NI having an interleaving device therein according to an exemplary embodiment of the present invention; and
FIG. 4 is a block diagram illustrating a configuration of an interleaving device according to another exemplary embodiment of the present invention.

### DETAILED DESCRIPTION OF EXEMPLARY EMBODIMENTS

Hereinafter, exemplary embodiments of the present invention will be described in detail with reference to the accompanying drawings.

The interleaving device temporarily stores data received from each AXI master or AXI slave, which is an AXI IP, in a buffer, interleaves the data according to the interleaving acceptance capability of each AXI master and each AXI slave, and transmits the interleaved data. The interleaving device can be provided in either an NoC router or an NI of an NoC system. In the exemplary embodiments, description will be made on the interleaving device provided in the NoC router and on the interleaving device provided in the NI.

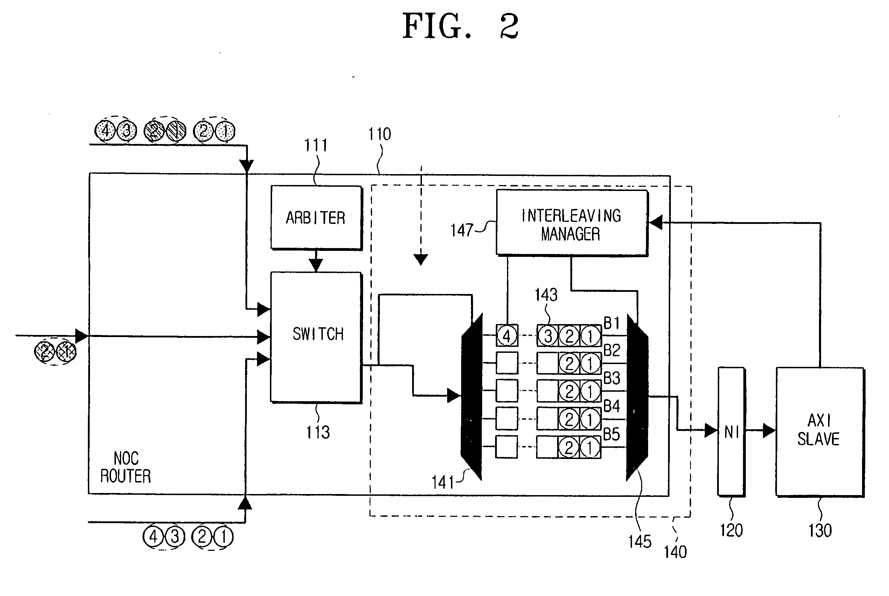

FIG. 2 is a block diagram illustrating a configuration of an NoC router having an interleaving device therein according to an exemplary embodiment of the present invention.

As shown in FIG. 2, an NoC router 110 includes a switch 113, arbiter 111, and interleaving device 140, the NoC router switches and transmits plural data transmitted from plural AXI masters to an AXI slave 130 through an NI 120.

The switch 113 switches plural data input to the NoC router 110 and sequentially transfers the data to the interleaving device 140 one by one.

The arbiter 111 controls the switch 113 on the basis of a predetermined certain reference so as to determine switching order for passing plural data received at the switch 113 from the plural AXI masters. The certain references that the arbiter 111 has include a priority method, a time-sequence method, and the like. The priority method refers to a method of assigning a priority to the plural AXI masters, and, if plural AXI masters input data, switching first the data received from the AXI master having the high priority. The time-sequence method refers to a method of unconditionally switching data in the first-come-first-serve manner, and can be combined with the priority method or the like if plural data are entered at the same time.

The interleaving device 140 includes a classifier 141, plural buffers 143, output unit 145, and interleaving manager 147.

The plural buffers 143 temporarily store data transmitted from the AXI masters, and can be implemented in as a First In First Out (FIFO) queue. The number of buffers 143 is determined by the number of AXI masters capable of accessing the AXI slave 130 connected to the NoC router 140 and transmitting data to the AXI slave. For example, if the AXI masters accessible to the AXI slave 130 are M1, M2, M3, M4, and M5, the number of buffers 143 becomes five. The length of such a buffer 143 can be arbitrarily determined by a designer, but may preferably be longer than a length of one burst or packet which is the minimum transmission unit.

The classifier 141 classifies data entered through the switch 113, and transfers the data to one of the plural buffers 143. In here, the classifier 141 classifies the entered data by the AXI master that has transmitted the data, and transfers the data to a buffer 143 corresponding to the AXI master. The classifier 141 can be implemented with a demultiplexer.

The output unit 145 retrieves burst or packet unit data from one or more buffers 143 selected according to the control of the interleaving manager 147, and outputs the retrieved data so as to be interleaved. The output unit 145 can be implemented with a multiplexer.

The interleaving manager 147 receives information on the interleaving acceptance capability from the AXI slave 130, and controls the output device 145 to interleave and provide as many data as corresponding to the interleaving acceptance capability to the AXI slave 130. The interleaving manager 147 decides whether data remains in each buffer 143 by detecting the remaining capacity of each buffer 143, and selects as many buffers 143 as corresponding to the interleaving acceptance capability among the buffers 143 in which data remain. The reference for selecting buffers 143 can be set to a priority, a time sequence, and the like, as in the arbiter 111. If all the data in any of the selected buffers 143 is transmitted to the AXI slave 130, the interleaving manager 147 selects another buffer 143 in order for data therein to be interleaved.

For example, if the interleaving acceptance capability of the AXI slave 130 is "2", the interleaving manager 147 can select a maximum of two buffers 143. If the interleaving manager 147 selects the buffers B1 and B2 of the buffers 143, the output unit 145 interleaves and provides the data of the buffers B1 and B2 to the NI 120. The buffer B 1 stores two data packets corresponding to one burst, and the buffer B2 stores one data packet corresponding to one burst, so that the output unit 145 interleaves the two data packets of the buffer B1 with one data packet of the buffer B2 for an output. If the data are output, the buffer B2 has no data therein, so the interleaving manager 147 has to select another buffer 143. If the interleaving manager 147 selects the buffer B4, the output unit 145 interleaves and outputs the remaining data packets of the buffer B1 with the data packets of the buffer B4 to the NI 120.

The interleaving manager 147 decreases the number of buffers to be interleaved, if the number of buffers 143 containing data is smaller than the interleaving acceptance capability. For example, if the interleaving acceptance capability is "2" and the number of buffers 143 containing data is one, the interleaving manager 147 transmits the data of the corresponding buffer 143 to the AXI slave 130. Further, if the interleaving acceptance capability is "3" and the number of buffers 143 containing data is two, the interleaving manager 147 interleaves and transmits only the data of the two buffers 143.

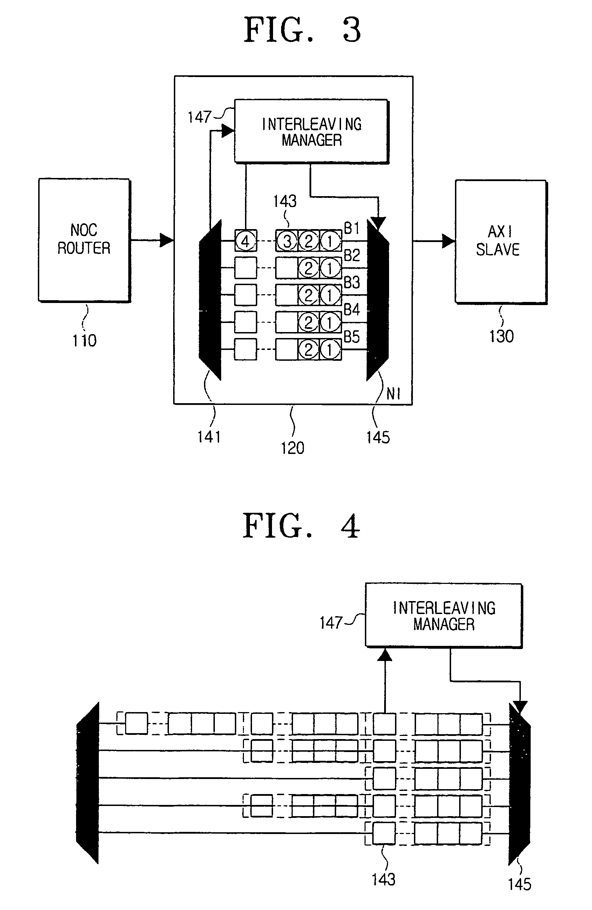

FIG. 3 is a block diagram illustrating a configuration of an NI having an interleaving device 140 according to an exemplary embodiment of the present invention. As shown in FIG. 3, the interleaving device 140 installed in the NI 120 is formed in the same configuration as that mounted in the NoC router 110. Since the NI 120 is provided with data switched by the switch 113 of the NoC router 110, the NI 120 does not need a separate switch 113 unlike the NoC router 110.

That is, the classifier 141 of the interleaving device 140 of the NI 120 classifies data provided from the NoC router 110 by AXI master, and provides the classified data to the buffer 143. Then, the output unit 145 retrieves data from plural buffers 143 selected according to the control of the interleaving manager 147, interleaves the retrieved data, and provides the interleaved data to the AXI slave 130.

FIG. 4 is a block diagram illustrating a configuration of an interleaving device according to another exemplary embodiment of the present invention. The interleaving device 140 of the present exemplary embodiment has buffers 143 which are different in size, unlike the interleaving device 140 shown in FIGS. 2 and 3.

In general, the AXI master can implement a multiple outstanding address function, and the number of multiple outstanding bursts or packets is predetermined according to the AXI master's performance or characteristics. In the above, since data of plural bursts or packets can be transmitted at one time, it may be preferable to appropriately adjust the size of the buffer 143 of the interleaving device 140.

Accordingly, the size of each buffer 143 is determined according to the number of multiple outstanding bursts or packets of the AXI master corresponding to each buffer 143. For example, if the numbers of multiple outstanding bursts or packets are 3, 2, 1, 2, and 1 as to the AXI masters M1, M2, M3, M4, and M5 respectively, as shown in FIG. 4, the sizes of the buffers B1, B2, B3, B4, and B5 corresponding to the AXI masters M1, M2, M3, M4, and M5 are determined as 3, 2, 1, 2, and 1 burst or packet size.

The process of determining the size of the buffer 143 as above can be performed in a software manner at the time when the interleaving device 140 is designed. For example, AXI masters accessible to one AXI slave 130 are identified, and the number of multiple outstanding bursts or packets of the identified AXI masters are detected. Next, each buffer 143 size is determined according to the detected number of multiple outstanding bursts or packets.

Description will be made as below on the process of data transmission in an NoC system provided with the interleaving device 140 configured as above, with reference to FIG. 2.

When data bursts or packets are input from the plural AXI masters to the NoC router 110, the switch 113 of the NoC router 110 provides the classifier 141 of the interleaving device 140 with the data bursts or packets according to the control of the arbiter 111.

The classifier 141 transfers the data to the buffer 143 corresponding to the AXI master that has transmitted the data so that the buffer 143 stores the data. The interleaving manager 147 detects the interleaving acceptance capability of the AXI slave 130 and the remaining capacity of each buffer 143, determines the number of buffers 143 to be interleaved according to the interleaving acceptance capability, and selects as many buffers 143 to be interleaved as the number of the determined buffers 143.

If the interleaving manager 147 selects the buffers 143, the output unit 145 retrieves, interleaves, and transmits data packets or bursts from the selected buffers 143 to the NI 120. If all the data stored in at least one of the buffers 143 selected during the transmissions of such data as the buffers 143 to be interleaved are transmitted, the interleaving manager 147 additionally selects another buffer 143. Next, the output unit 145 interleaves the data of the selected buffers 143 with the data of the previously selected buffers 143, and transmits the interleaved data to the NI 120.

For example, if the interleaving acceptance capability of the AXI slave 130 is "3", the interleaving manager 147 selects three buffers 143. If the interleaving manager 147 selects M1, M3, and M5 of the buffers 143 in FIG. 2, the output unit 145 retrieves and transmits data from the corresponding buffers 143 to the NI 120, so the data from the three buffers 143 are interleaved and provided to the NI 120.

The buffer M1 stores two data packets corresponding to one burst, and the buffers M3 and M5 store one data packet corresponding to one burst respectively, so that, if the output unit retrieves and transmits one data packet from each of the buffers M1, M2, and M3, no data exist in the buffers M3 and M5. Next, the interleaving manager 147 selects the buffers M2 and M4 instead of buffers M3 and M5, and thus the output unit 145 interleaves the data packets of the buffers M2 and M4 with the data packet of the buffer M1 and transmits the interleaved data.

If the number of buffers 143 containing data becomes smaller than the interleaving acceptance capability during the data transmission as above, the interleaving manager 147 decreases the number of buffers to be selected.

As above, if the interleaving device 140 is installed in either the NoC router 110 or the NI 120 of the NoC system, the data to be interleaved can be selected so as to meet the interleaving acceptance capability of the AXI master or AXI slave 130. Accordingly, a deadlock can be prevented, which occurs when data transmissions are attempted from as many AXI masters or AXI slaves 130 as exceeding the interleaving acceptance capability when data are interleaved

As aforementioned, the NoC system employing AXI protocol according to the exemplary embodiments of the present invention can select data to be transmitted to meet the interleaving acceptance capability of the IP and smoothly transmit the data, thereby enhancing the performance of the system.

Further, the foregoing exemplary embodiments and advantages are merely exemplary and are not to be construed as limiting the present invention. The present invention can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A Network-on-Chip system employing an Advanced eXtensible Interface protocol, the Network-on-Chip comprising:
a Network-on-Chip router (110) which is adapted to classify data transmitted from a plurality of Advanced eXtensible Interface Components according to a destination Advanced eXtensible Interface Component; and
a network interface (120) which is adapted to process data from the Network-on-Chip router and provide the processed data to the destination Advanced eXtensible Interface Component,
**characterised in that** one of the Network-on-Chip router and the network interface comprises:
a plurality of buffers (143) which store data provided from each of the Advanced eXtensible Interface Components;
a classifier (141) which is arranged to classify the data provided from each of the Advanced eXtensible Interface Components according to the Advanced eXtensible Interface Components and to transfer the data to a buffer corresponding to the Advanced eXtensible Interface Component that has transmitted the data; and
an interleaving manager (147) which is adapted to select buffers, from which data is retrieved, among the plurality of buffers (143) according to an interleaving acceptance capability which is a number of interleaving data that can be accepted by the destination Advanced eXtensible Interface Component.

2. The Network-on-Chip system of claim 1, wherein the interleaving manager (147), during transmitting data by selecting at least one buffer according to the interleaving acceptance capability of the destination Advanced eXtensible Interface Component, is adapted to select another buffer containing data if all data stored in at least one of the selected buffers are completely transmitted.

3. The Network-on-Chip system of claim 1 or 2, wherein the interleaving manager (147) is adapted to decrease a number of buffers to be interleaved if a number of data-containing buffers among the buffers is smaller than the interleaving acceptance capability of the destination Advanced eXtensible Interface Component.

4. The Network-on-Chip system of claim 1, wherein the classifier (141) comprises a demultiplexer.

5. The Network-on-Chip system of any preceding claim, wherein the one of the Network-on-Chip router and the network interface further comprises an output unit (145) which is adapted to retrieve data from at least one of the buffers selected by the interleaving manager and provide the data to the destination Advanced eXtensible Interface Component.

6. The Network-on-Chip system of claim 5, wherein the output unit (145) comprises a multiplexer.

7. The Network-on-Chip system of any preceding claim, wherein a number of the buffers (143) is determined to be the same as a number of Advanced eXtensible Interface Components accessible to the destination Advanced eXtensible Interface Component, so that the buffers match the Advanced eXtensible Interface Components in a one-to-one manner.

8. The Network-on-Chip system of claim 7, wherein a size of each of the buffers (143) is the same as a maximum value of a transmission unit that the Advanced eXtensible Interface Component can transmit in one burst.

9. The Network-on-Chip system of claim 7, wherein a size of each of the buffers (143) is a one-to-one match according to transmission capacity set for each Advanced eXtensible Interface Component.

10. An interleaving method for a Network-on-Chip system employing an Advanced eXtensible Interface protocol, the interleaving method being **characterised by**:
storing data transmitted from a plurality of Advanced eXtensible Interface Components by classifying the data according to the plurality of Advanced eXtensible Interface Components and transferring the data to a buffer corresponding to the Advanced eXtensible Interface Component that has transmitted the data;
selecting at least one buffer (143) according to an interleaving acceptance capability which is a number of interleaving data that can be accepted by a destination Advanced eXtensible Interface Component; and
retrieving data from selected buffers, interleaving the retrieved data, and transmitting the interleaved data to the destination Advanced eXtensible Interface Component.

11. The interleaving method of claim 10, further comprising selecting another buffer if at least one buffer of the selected buffers becomes empty during the transmitting the interleaved data.

12. The interleaving method of claim 10 or 11, wherein a number of buffers to be interleaved is decreased if a number of buffers containing data is smaller than the interleaving acceptance capability during the transmitting the interleaved data.

## Patentansprüche

1. Netzwerk-on-Chip-System, das ein Advanced eXtensible Interface Protokoll verwendet, wobei das Netzwerk-on-Chip-System Folgendes umfasst:
einen Netzwerk-on-Chip-Router (110) zum Klassifizieren von Daten, die von einer Mehrzahl von Advanced eXtensible Interface Komponenten übertragen werden, je nach einer Zielkomponente der Advanced eXtensible Interface; und
eine Netzwerkschnittstelle (120) zum Verarbeiten von Daten von dem Netzwerk-on-Chip-Router und zum Senden der verarbeiteten Daten zu der Zielkomponente der Advanced eXtensible Interface,
**dadurch gekennzeichnet, dass** der Netzwerk-on-Chip-Router oder die Netzwerkschnittstelle Folgendes umfasst:
mehrere Puffer (143), die Daten von jeder der Komponenten der Advanced eXtensible Interface speichern;
einen Klassifizierer (141) mit der Aufgabe, die von jeder der Komponenten der Advanced eXtensible Interface kommenden Daten gemäß den Komponenten der Advanced eXtensible Interface zu klassifizieren und die Daten zu einem Puffer zu übertragen, der der Komponente der Advanced eXtensible Interface entspricht, die die Daten gesendet hat; und
einen Verschachtelungsmanager (147) mit der Aufgabe, Puffer, aus denen Daten abgerufen werden, aus den mehreren Puffern (143) je nach einer Verschachtelungsannahmekapazität zu selektieren, die eine Anzahl von Verschachtelungsdaten ist, die die Zielkomponente der Advanced eXtensible Interface annehmen kann.

2. Netzwerk-on-Chip-System nach Anspruch 1, wobei der Verschachtelungsmanager (147) beim Senden von Daten durch Selektieren wenigstens eines Puffers je nach der Verschachtelungsannahmekapazität der Zielkomponente der Advanced eXtensible Interface die Aufgabe hat, einen anderen Daten enthaltenden Puffer zu selektieren, wenn alle in wenigstens einem der selektierten Puffer gespeicherten Daten vollständig gesendet sind.

3. Netzwerk-on-Chip-System nach Anspruch 1 oder 2, wobei der Verschachtelungsmanager (147) die Aufgabe hat, eine Anzahl von zu verschachtelten Puffern zu verringern, wenn eine Anzahl von Daten enthaltenden Puffern aus den Puffern kleiner ist als die Verschachtelungsanahmekapazität der Zielkomponente der Advanced eXtensible Interface.

4. Netwerk-on-Chip-System nach Anspruch 1, wobei der Klassifizierer (141) einen Demultiplexer umfasst.

5. Netzwerk-on-Chip-System nach einem der vorherigen Ansprüche, wobei der Netzwerk-on-Chip-Router oder die Netzwerkschnittstelle ferner eine Ausgabeeinheit (145) mit der Aufgabe umfasst, Daten aus wenigstens einem der Puffer abzurufen, die vom Verschachtelungsmanager selektiert wurden, und Daten zur Zielkomponente der Advanced eXtensible Interface zu senden.

6. Netzwerk-on-Chip-System nach Anspruch 5, wobei die Ausgabeeinheit (145) einen Multiplexer umfasst.

7. Netzwerk-on-Chip-System nach einem der vorherigen Ansprüche, wobei eine Anzahl der Puffer (143) als dieselbe wie die Anzahl von Komponenten der Advanced eXtensible Interface festgestellt wird, die für die Zielkomponente der Advanced eXtensible Interface zugängig ist, so dass die Puffer jeweils eins zu eins mit den Komponenten der Advanced eXtensible Interface übereinstimmen.

8. Netwerk-on-Chip-System nach Anspruch 7, wobei eine Größe jedes der Puffer (143) dieselbe ist wie ein Höchstwert einer Sendeeinheit, die die Komponente der Advanced eXtensible Interface in einem Burst senden kann.

9. Netzwerk-on-Chip-System nach Anspruch 7, wobei eine Größe jedes der Puffer (143) eins zu eins mit einer für jede Komponente der Advanced eXtensible Interface eingestellten Sendekapazität übereinstimmt.

10. Verschachtelungsverfahren für ein Netzwerk-on-Chip-System, das ein Advanced eXtensible Interface Protokoll verwendet, wobei das Verschachtelungsverfahren **gekennzeichnet ist durch**:
Speichern von Daten, die von mehreren Komponenten der Advanced eXtensible Interface gesendet wurden, **durch** Klassifizieren der Daten gemäß den mehreren Komponenten der Advanced eXtensible Interface und Übertragen der Daten zu einem Puffer, der der Komponente der Advanced eXtensible Interface entspricht, die die Daten gesendet hat;
Selektieren wenigstens eines Puffers (143) gemäß einer Verschachtelungsannahmekapazität, die eine Anzahl von Verschachtelungsdaten ist, die eine Zielkomponente der Advanced eXtensible Interface annehmen kann; und
Abrufen von Daten von selektierten Puffern, Verschachteln der abgerufenen Daten und Senden der verschachtelten Daten zur Zielkomponente der Advanced eXtensible Interface.

11. Verschachtelungsverfahren nach Anspruch 10, das ferner das Selektieren eines anderen Puffers beinhaltet, wenn wenigstens ein Puffer der selektierten Puffer während des Sendens der verschachtelten Daten leer wird.

12. Verschachtelungsverfahren nach Anspruch 10 oder 11, wobei eine Anzahl von zu verschachtelnden Puffern verringert wird, wenn eine Anzahl von Daten enthaltenden Puffern kleiner als die Verschachtelungsannahmekapazität während des Sendens der verschachtelten Daten ist.

## Revendications

1. Système de réseau sur puce employant un protocole d'interface extensible avancée, le réseau sur puce comprenant :
un routeur de réseau sur puce (110) qui est adapté pour classifier les données transmises par une pluralité de composants d'interface extensible avancée selon un composant d'interface extensible avancée de destination ; et
une interface de réseau (120) qui est adaptée pour traiter les données provenant du routeur de réseau sur puce et fournir les données traitées au composant d'interface extensible avancée de destination,
**caractérisé en ce que** le routeur de réseau sur puce ou l'interface de réseau comprend :
une pluralité de tampons (143) qui stockent les données fournies par chacun des composants d'interface extensible avancée ;
un classificateur (141) qui est agencé pour classifier les données fournies par chacun des composants d'interface extensible avancée selon les composants d'interface extensible avancée et pour transférer les données à un tampon correspondant au composant d'interface extensible avancée qui a transmis les données ; et
un gestionnaire d'entrelacement (147) qui est adapté pour sélectionner des tampons, à partir desquels les données sont récupérées, parmi la pluralité de tampons (143) selon une capacité d'acceptation d'entrelacement qui est un nombre de données d'entrelacement qui peuvent être acceptées par le composant d'interface extensible avancée de destination.

2. Système de réseau sur puce selon la revendication 1, dans lequel le gestionnaire d'entrelacement (147), pendant la transmission des données par sélection d'au moins un tampon selon la capacité d'acceptation d'entrelacement du composant d'interface extensible avancée de destination; est adapté pour sélectionner un autre tampon contenant des données si toutes les données stockées dans au moins un des tampons sélectionnés sont entièrement transmises.

3. Système de réseau sur puce selon la revendication 1 ou 2, dans lequel le gestionnaire d'entrelacement (147) est adapté pour diminuer un nombre de tampons à entrelacer si un nombre de tampons contenant des données parmi les tampons est plus petit que la capacité d'acceptation d'entrelacement du composant d'interface extensible avancée de destination.

4. Système de réseau sur puce selon la revendication 1, dans lequel le classificateur (141) comprend un démultiplexeur.

5. Système de réseau sur puce selon l'une quelconque des revendications précédentes, dans lequel soit le routeur de réseau sur puce soit l'interface de réseau comprend en outre une unité de sortie (145) qui est adaptée pour récupérer les données d'au moins l'un des tampons sélectionnés par le gestionnaire d'entrelacement et fournir les données au composant d'interface extensible avancée de destination.

6. Système de réseau sur puce selon la revendication 5, dans lequel l'unité de sortie (145) comprend un multiplexeur.

7. Système de réseau sur puce selon l'une quelconque des revendications précédentes, dans lequel un nombre des tampons (143) est déterminé comme étant le même qu'un nombre de composants d'interface extensible avancée accessibles au composant d'interface extensible avancée de destination, de sorte que les tampons correspondent aux composants d'interface extensible avancée à raison d'un pour un.

8. Système de réseau sur puce selon la revendication 7, dans lequel une taille de chacun des tampons (143) est la même qu'une valeur maximum d'une unité de transmission que le composant d'interface extensible avancée peut transmettre en une rafale.

9. Système de réseau sur puce selon la revendication 7, dans lequel une taille de chacun des tampons (143) correspond à raison d'un pour un selon la capacité de transmission définie pour chaque composant d'interface extensible avancée.

10. Procédé d'entrelacement pour un système de réseau sur puce employant un protocole d'interface extensible avancée, le procédé d'entrelacement étant **caractérisé par** :
le stockage des données transmises par une pluralité de composants d'interface extensible avancée en classifiant les données selon la pluralité de composants d'interface extensible avancée et en transférant les données à un tampon correspondant au composant d'interface extensible avancée qui a transmis les données ;
la sélection d'au moins un tampon (143) selon une capacité d'acceptation d'entrelacement qui est un nombre de données d'entrelacement qui peuvent être acceptées par un composant d'interface extensible avancée de destination ; et
la récupération des données provenant des tampons sélectionnés, l'entrelacement des données récupérées, et la transmission des données entrelacées au composant d'interface extensible avancée de destination.

11. Procédé d'entrelacement selon la revendication 10, comprenant en outre la sélection d'un autre tampon si au moins un tampon des tampons sélectionnés devient vide pendant la transmission des données entrelacées.

12. Procédé d'entrelacement selon la revendication 10 ou 11, dans lequel un nombre de tampons à entrelacer est diminué si un nombre de tampons contenant des données est plus petit que la capacité d'acceptation d'entrelacement pendant la transmission des données entrelacées.
